# FASCICULE DE BREVET EUROPEEN

(11) **EP 1 900 268 B1**
(45) Date de publication et mention de la délivrance du brevet: **05.08.2015**
(21) Numéro de dépôt: 07116011.3
(22) Date de dépôt: 10.09.2007
(51) Int. Cl.: A01B 15/06

(54) **Pièce d'usure et sa fixation avec un coin, corps de labour et charrue comportant une telle pièce d'usure**
Verschleissstück und seine Befestigung mit einem Keil, Pflugkörper und Pflug, die ein solches Verschleissstück umfassen
Wearing part and its fixing with a wedge, plough body and plough comprising such a wearing part

(30) Priorité: 13.09.2006 FR 0653708
(43) Date de publication de la demande: 19.03.2008
(73) Titulaire: Kuhn-Huard S.A., 44142 Châteaubriant (FR)
(72) Inventeur: Renault, Christophe, 35230 Bourgbarre (FR); Cueille, Laurent, 44110 Erbray (FR)
(74) Mandataire: Esch, Esther Evelyne

(56) Documents cités:
- FR-A- 2 036 688
- GB-A- 678 382
- US-A- 4 625 810
- US-A- 5 027 535

## Description

La présente invention concerne un outil de travail qui est protégé, d'une usure importante, par une pièce d'usure. Ainsi la présente invention trouvera son application dans les machines agricoles, les engins de travaux publics et, de manière générale, dans le domaine des matériels destinés à travailler le sol. D'une manière particulière, la présente invention concerne également un corps de labour avec un tel outil de travail ainsi qu'une charrue comportant au moins un corps de labour équipé d'un tel outil de travail selon l'invention.

La présente invention se rapporte ainsi à un outil de travail protégé par une pièce d'usure présentant au moins une partie active et une partie de liaison montée sur l'outil de travail au moyen d'une rainure de guidage ménagée dans l'outil de travail.

Le contact répété avec le sol engendre une usure surtout à l'avant des outils de travail, nécessitant un remplacement fréquent de l'outil de travail. Ces remplacements d'outils sont d'une part onéreux et d'autre part relativement longs en temps d'immobilisation. Ainsi, il est notamment connu de protéger l'outil de travail par une pièce d'usure ce qui permet de réduire considérablement les temps d'intervention ainsi que les coûts de maintenance. De manière connue, la pièce d'usure est fixée, à l'aide de boulons, sur l'outil de travail à l'endroit où se produit une usure importante. Un tel mode de fixation engendre très souvent des difficultés de démontage compte tenu de l'usure par abrasion des boulons, notamment des écrous.

Prenant ces difficultés en considération, le document WO 01/56360 propose un outil de travail (soc) protégé par une pièce d'usure (pointe). Cette pointe est montée sur le soc au moyen d'une rainure de guidage. Cette rainure de guidage est convergente. La pointe présente une partie active qui est destinée à être usée et une partie de liaison qui est destinée à être fixée sur le soc. Pour le montage de la pointe sur le soc, la partie de liaison est engagée dans la rainure dans le sens opposé à la direction de travail. Un coup de marteau, dans le sens opposé à la direction de travail, sur la partie active permet de bloquer la pointe dans la rainure. La partie de liaison et la rainure présentent une forme complémentaire en V, qui verrouille le pivotement de la pointe autour de son axe longitudinal lorsqu'elle est montée sur le soc. La translation de la pointe selon la direction de travail est, quant à elle, bloquée par le coincement de la partie de liaison dans la rainure convergente, par le frottement des surfaces en V qui convergent.

Pour garantir une bonne fixation et un bon maintien, la pointe et la partie avant du soc disposent d'une épaisseur assez importante. Cette épaisseur supplémentaire pénalise d'une part la pénétration dans la terre de la pointe à mi-usure et d'autre part le ratio de masse d'acier usable par rapport à la masse de la pointe neuve. Par ailleurs, la pointe de soc n'est pas réversible car la partie de liaison est disposée dans le prolongement de la partie active. On constate au cours du labour qu'en plus de l'usure de la pointe, la partie avant du soc comportant la rainure est également altérée par frottement de la terre. De plus, le blocage de la pointe dans l'épaisseur du soc implique une zone morte qui n'est pas recouverte. La terre vient alors combler la zone morte apparente et provoque une bande de collage de terre ayant pour conséquence une usure prononcée des pièces.

Un autre outil de travail est notamment connu par le document FR 2 036 688. Il s'agit également d'un corps de labour avec un soc qui est protégé par une pointe du type barre. La pointe barre est montée dans un fourreau et est maintenue au moyen d'un coin avec ergot. Le fourreau empêche la rotation de la pointe barre autour de son axe longitudinal. La translation de la pointe barre est bloquée au moyen du coin inséré entre le fourreau et la pointe barre et de l'ergot qui se loge dans un des moletages ménagés dans la pointe barre. La partie inférieure de la pointe barre repose sur la face inférieure du fourreau et le coin est monté en avant entre la partie supérieure de la pointe barre et la face supérieure du fourreau.

Avec une telle fixation, on constate notamment que l'écoulement de la terre lors du labour est perturbé et que les pièces constituant la fixation (fourreau, coin) sont dégradées. Lors du labour, le coin et la partie supérieure du fourreau sont soumis à une usure importante car la position de ces pièces sur le corps de charrue s'oppose littéralement à l'écoulement de la terre. Cette usure importante engendre un démontage pénible et augmente considérablement le risque de perte du coin et/ou de la pointe.

La présente invention a pour but de remédier aux inconvénients précités. La pièce d'usure devra bien protéger l'outil de travail contre l'usure tout en favorisant l'écoulement de la terre même lorsque la pièce d'usure est plus ou moins usée. La fixation de la pièce d'usure sur l'outil de travail doit être facile à mettre en oeuvre, rapide et efficace du point de vue de la tenue dans le temps.

A cet effet, une importante caractéristique de l'invention consiste en ce que le verrouillage en rotation et en translation de la pièce d'usure est réalisé par l'intermédiaire d'un coin de blocage monté entre la partie de liaison et la rainure de guidage.

L'invention a pour objet un corps de labour comportant notamment un sep et un soc de charrue caractérisé en ce que le sep correspond audit support et que le soc de charrue correspond audit outil de travail.

L'invention a également pour objet une charrue caractérisée en ce qu'elle comporte au moins un corps de labour du type précité.

D'autres caractéristiques et avantages de l'invention ressortiront des revendications et de la description ci-après d'un exemple de réalisation non limitatif de l'invention avec référence aux dessins annexés dans lesquels :
- la **figure 1** représente un corps de labour dont le soc est équipé d'une pointe selon l'invention,
- la **figure 2** représente une vue de dessus en éclaté d'un outil de travail selon l'invention,
- la **figure 3** est une vue de dessous d'un outil de travail avec une pièce d'usure selon l'invention,
- la **figure 4** représente une vue de face de la figure 1.

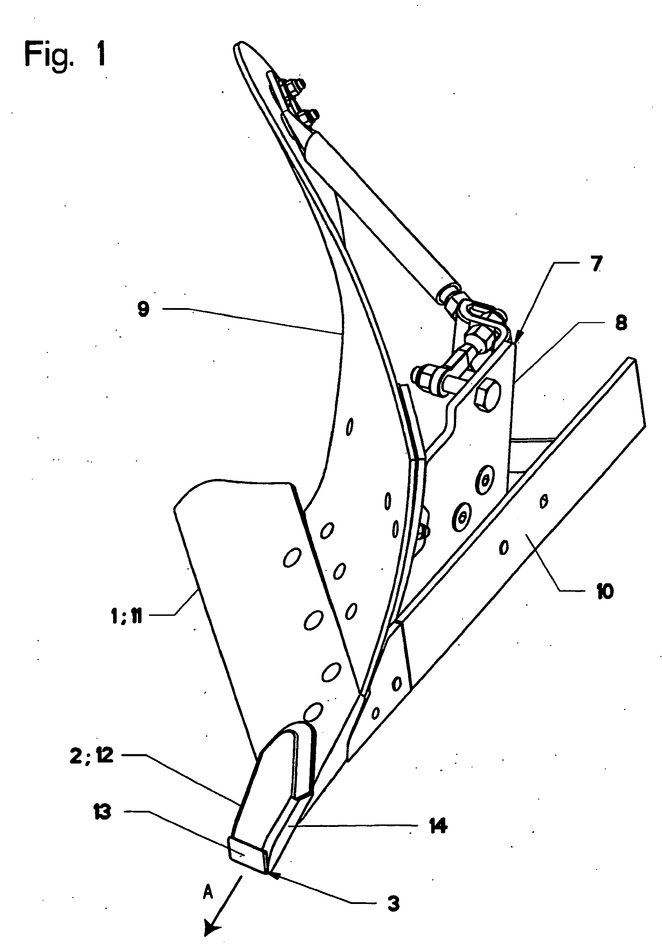

La figure 1 représente, selon un exemple de réalisation préféré, un corps de labour (7). Ce corps de labour (7) comporte un sep (8) sur lequel sont fixés un versoir (9), un contresep (10) et un soc (11). Le sep (8) est la pièce centrale du corps de labour (7), car c'est sur celui-ci que viennent se fixer les autres pièces principales : le versoir (9), le contresep (10) et le soc (11). Le contresep (10) glisse sur le fond du sillon et le long de la muraille lorsque la charrue avance et le soc (11) découpe la terre horizontalement. La bande découpée est alors soulevée par le soc (11) et est retournée par le versoir (9). La partie verticale de la bande de terre est, pour sa part, découpée par un aileron coutre (non représenté).

Le soc (11) découpe ou tranche une bande de terre qui est ensuite retournée par le versoir (9) lors du déplacement d'une charrue (non représentée). D'une manière connue, le soc (11) est cambré pour faciliter le soulèvement de la bande de terre. Il peut être réalisé en une seule ou plusieurs partie(s). Etant en contact avec la terre, il est donc fortement soumis à l'usure. Le mouvement relatif de la terre sur le soc (11) et la pression importante du sol sur le soc (11) génèrent une usure par abrasion. Pour éviter ce phénomène, le soc (11) est protégé par une pointe de soc (12). Cette pointe de soc (12) est amovible et interchangeable. La pointe (12) permet au corps de labour (7) de pénétrer dans le sol, cette opération défonce la terre devant le soc (11) dans une direction de travail (A) et protège le soc (11) de l'effet d'abrasion dans la zone où celui-ci est soumis à l'usure la plus importante et la plus rapide. Cette pointe (12) prolonge la durée de vie du soc (11). De manière généralement connue, la pointe (12) est légèrement vrillée et cambrée pour respecter les angles caractéristiques de travail.

La pointe (12) comporte une partie active (3) qui présente avantageusement deux tranchants (13, 14) destinés à couper la terre. La partie active (3) est exposée à une action d'usure par contact avec le sol lors de l'exécution d'une opération de travail du sol dans la direction d'avance (A). Un tranchant frontal (13) est disposé sur l'arête frontale et un tranchant latéral (14) est disposé sur l'arête latérale. Ces deux tranchants (13, 14) forment un angle d'environ 80° l'un par rapport à l'autre. La pointe (12) est montée de façon à ce que le tranchant latéral (14) soit parallèle à la muraille de la raie de labour. Lorsque la partie active (3) de la pointe (12) est usée, il faut remplacer la pointe usagée par une pointe neuve. La pointe (12), représentée à la figure 1, n'est pas réversible.

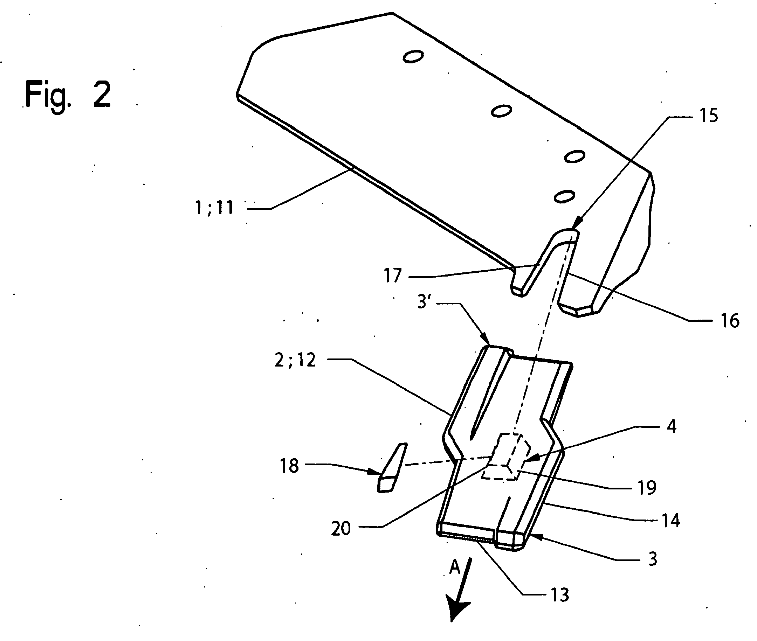

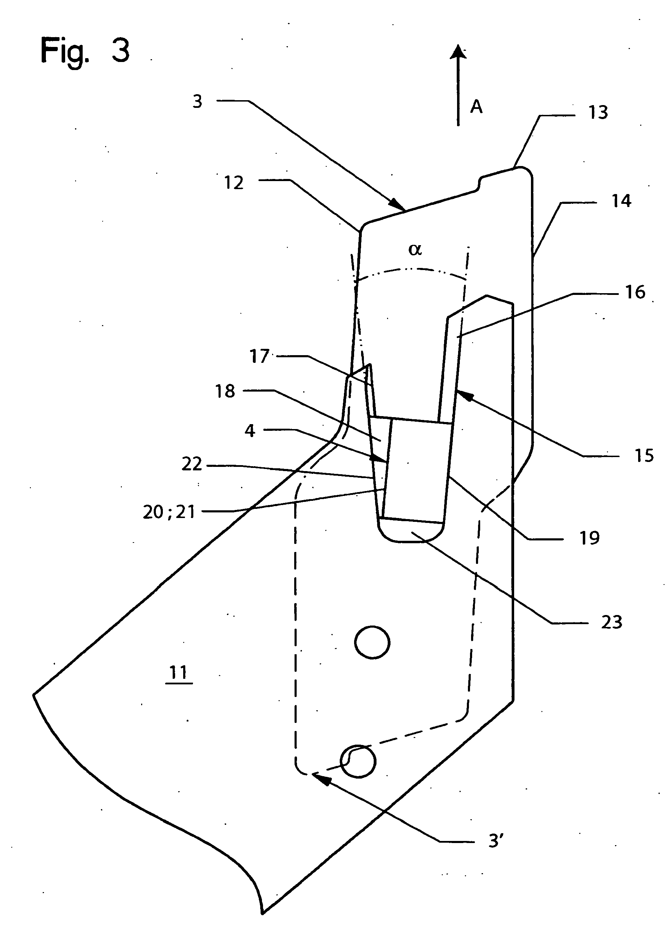

La figure 2 est une représentation éclatée d'un soc (11) et d'une pointe (12) selon une vue de dessus. La pointe (12) comporte en plus de la partie active (3), une partie de liaison (4) qui permet de la fixer sur le soc (11). Le soc (11) présente à cet effet une rainure (15) de guidage destinée à recevoir la partie de liaison (4). La rainure (15) présente un axe longitudinal. Sur la figure 3, illustrant la fixation selon une vue de dessous, la rainure (15) est ménagée dans la partie avant du soc (11), elle présente deux faces (16, 17). La rainure (15) est convergente dans le sens longitudinal, elle se resserre au fur et à mesure qu'elle s'éloigne de l'extrémité du soc (11). La rainure (15) présente une première face (16) de référence et une deuxième face (17). Les deux faces (16, 17) sont orientées d'un premier angle (α) compris entre 5° et 15°. La forme convergente de la rainure (15) ainsi que la différence de longueur des deux faces (16, 17) facilitent l'engagement de la partie de liaison (4). La longueur de la première face (16) est plus importante que la longueur de la deuxième face (17).

Selon une importante caractéristique, le verrouillage en rotation et en translation de la pointe (12) sur le soc (11) est réalisé par l'intermédiaire d'un coin de blocage (18) monté entre la partie de liaison (4) et la rainure de guidage (15). La pointe (12) est insérée dans la rainure (15) via sa partie de liaison (4) et est bloquée par le coin (18) sur le soc (11). La direction et le sens de montage de la pointe (12) et du coin (18) sont identiques. Pour ce faire, la partie de liaison (4) est guidée par la première face (16) de référence de la rainure (15). Le coin (18) est, pour sa part, guidé entre la partie de liaison (4) et la deuxième face (17). La partie de liaison (4) en dessous de la pointe (12) est représentée en pointillé sur la figure 2. De cette manière, la pointe (12) est serrée sur le soc (11) au fur et à mesure que la partie de liaison (4) et le coin (18) s'introduisent dans la rainure (15) convergente. Cette fixation est donc facile à mettre en oeuvre. La figure 3 représente la pointe (12) fixée sur le soc (11) en vue de dessous. La translation et la rotation suivant l'axe longitudinal de la pointe (12) sont supprimées par l'insertion du coin (18) entre la rainure (15) du soc (11) et la partie de liaison (4) de la pointe (12). La translation et la rotation suivant les deux autres axes (axe transversal et axe normal) sont limitées par la forme de la rainure (15).

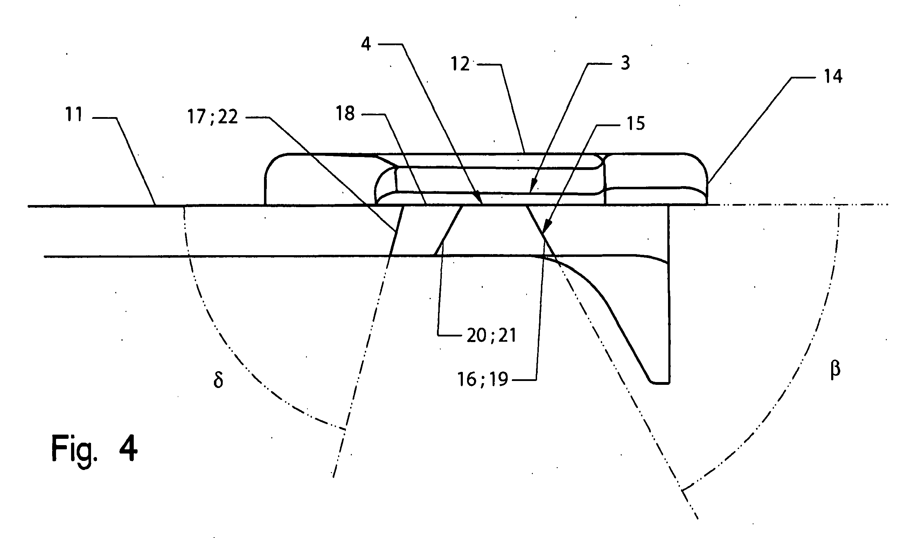

A la lumière de la figure 4, on remarque que la rainure (15) présente une section sensiblement en forme de queue d'aronde. Les faces (16, 17) de la rainure (15) sont inclinées par rapport à l'horizontale. Chaque face (16, 17) présente une inclinaison différente. La première face (16) est inclinée selon un deuxième angle (β) par rapport à l'horizontale alors que la deuxième face (17) est inclinée d'un troisième angle (δ) par rapport à l'horizontale. Les faces (16, 17) constituent ensemble une forme en V dont les extrémités se réunissent au-delà du soc (11). Ladite rainure de guidage (15) n'est donc pas symétrique par rapport à son axe longitudinal. Le deuxième angle (β) est avantageusement compris entre 50° et 65°. Le troisième angle (δ) est, pour sa part, avantageusement compris entre 70° et 80°. Le troisième angle (δ) est plus grand que le deuxième angle (β). Grâce à ces deux inclinaisons différentes, on évite un démontage intempestif de la pointe (12) car ledit coin (18) ne peut pas se désolidariser, et par conséquent il ne sera pas perdu durant le travail. Ces faces (16, 17) inclinées de la rainure (15) assure également une bonne répartition des pressions de contact. Par ailleurs, on remarque que la rainure (15) n'est pas symétrique et que la longueur du coin (18) est sensiblement égale à la longueur de la partie de liaison (4) de la pointe (12).

Pour la fixation de la pointe (12), la partie de liaison (4) est guidée par la première face (16) de référence de la rainure (15). La partie de liaison (4) présente une troisième et une quatrième faces (19, 20). Au moins une des faces (19, 20) de la partie de liaison (4) est destinée à coopérer avec la première face (16), cette face (19, 20) est donc orientée selon le deuxième angle (β). De manière avantageuse, l'orientation de la partie de liaison (4) est sensiblement parallèle au tranchant latéral (14) de la partie active (3) de la pointe (12). Dans l'exemple de réalisation représenté à la figure 4, les deux faces (19, 20) sont orientées chacune du deuxième angle (β). Ainsi la partie de liaison (4) est symétrique par rapport à son plan médian. Le coin (18) présente, quant à lui, une forme particulière qui est avantageusement complémentaire à la rainure (15) et à la partie de liaison (4). Le coin (18) présente ainsi une forme convergente selon le premier angle (α). Cette forme convergente facilite l'engagement du coin (18) dans l'espace entre la rainure (15) et la partie de liaison (4). Il comporte deux faces (21, 22), une cinquième face (21) et une sixième face (22). La cinquième face (21) et la sixième face (22) sont orientées du premier angle (α) l'une par rapport à l'autre. La cinquième face (21) étant destinée à coopérer avec la troisième face (19) ou la quatrième face (20) de la partie de liaison (4). La cinquième face (21) est de ce fait orientée selon le deuxième angle (β). La sixième face (22) coopère avec la deuxième face (17) de la rainure (15), elle est orientée selon le troisième angle (δ).

Dans l'exemple de réalisation représenté sur les figures, la première face (16) de la rainure (15) constitue la direction de référence pour le guidage de la partie de liaison (4). Cette direction de référence est, d'une manière avantageuse, sensiblement parallèle à la direction de travail (A).

Le coin (18), en complément de la rainure (15) et de la partie de liaison (4), bloque tous les mouvements de rotation et de translation selon les trois axes de référence (x, y, z) de la pointe (12). Pour bien bloquer la fixation, il est recommandé de donner un coup de marteau sur la pointe (12) dans le sens du montage. Ce blocage sera amplifié lors du travail car l'avancement de la charrue génère des efforts agissant dans le sens de montage. Le sens de montage correspond sensiblement au sens opposé de la direction de travail (A). La direction de montage correspond à la direction de la première face (16). Ainsi le coin (18) est inséré depuis la partie large vers la partie étroite de la rainure convergente (15).

On remarque également la présence d'une zone morte (23) à l'extrémité convergente de la rainure (15). Cette zone morte (23) correspond à un espace vide. Grâce à la zone morte (23), l'extrémité du coin (18) ne vient pas en contact avec l'extrémité convergente de la rainure (15). La zone morte (23) permet ainsi un blocage efficace du coin (18) dans la rainure (15) et par conséquent de la pointe (12) sur le soc (11). Lorsque la pointe (12) est ainsi bloquée, la fixation peut faire face aux efforts de travail mais aussi aux chocs divers pouvant être générés par des éléments comme des pierres.

Plus le labour se déroule dans des conditions difficiles, plus il est important de bien maintenir des pièces. Ces conditions difficiles (terres lourdes, nombreuses pierres, chocs, ...) se traduisent par des efforts importants sur les corps de labour (7) et les pièces d'usure (2). Une partie de ces efforts importants est utilisée pour bloquer la pointe (12) sur le soc (11).

D'une manière particulièrement avantageuse, le coincement de la pointe (12) sur le soc (11) est encore augmenté par les efforts de travail au cours du labour. Comme la première face (16) de la rainure (15) est sensiblement parallèle à la direction de travail (A), les efforts sur la pointe (12) sont dirigés dans le sens opposé à la direction de travail (A). Ces efforts sont donc dirigés dans le sens du coincement de la pointe (12) dans la rainure (15) du soc (11).

Avec une fixation de la pointe (12) sur le soc (11) conforme à l'invention, il est possible de placer la pointe (12) dans une position bien définie sur le soc (11) et ceci grâce au coin (18). En effet, selon la cote à laquelle on place le coin (18) le long de la quatrième face (20) de la partie de liaison (4), le coincement de la pointe (12) se fait plus ou moins tôt dans la rainure (15) convergente. La position initiale du coin (18) détermine la position finale de la pointe (12) sur le soc (11). Ce réglage permet donc d'une part de modifier la profondeur de pénétration de la pointe (12) et d'autre part, de régler et d'ajuster la position de toutes les pointes à la même cote. Ainsi pour une charrue comportant par exemple quatre corps de labour (7), la profondeur de labour est identique sur toute la largeur de travail de la charrue. Pour améliorer le réglage, il peut être envisagé d'indexer le coin de blocage (18) sur la pointe (12) par des moletages et un tenon au niveau de la liaison coin/pointe.

La figure 2 illustre une pièce d'usure (2) qui est réversible. Il s'agit, dans cet exemple de réalisation, d'une pointe réversible car elle est susceptible d'être montée sur le soc (11) selon deux orientations à 180° l'une de l'autre. Cette pointe réversible présente deux parties actives (3, 3') opposées, elle présente une forme parallélépipédique. De cette manière, lorsque la première partie active (3) est usée, la pointe réversible est inversée de manière à pouvoir utiliser la seconde partie active (3'). Avec une telle pointe réversible, on obtient un rapport de la masse d'acier usable sur la masse d'acier totale d'une pointe neuve supérieur à 50%. Avec une pointe réversible, le recouvrement de la zone morte (23), par la partie active (3, 3') qui n'est pas en service, est optimal et empêche la pénétration de la terre dans la zone morte (23) entre le coin (18) et la rainure (15). Avec une partie de liaison (4) symétrique par rapport à son axe longitudinal, on peut engager la pointe (12) selon les deux orientations à 180° l'une de l'autre dans la rainure (15).

Selon une autre caractéristique importante de l'invention, la partie de liaison (4) s'étend sensiblement en dessous de la partie active (3) de la pointe (12). De cette manière, la fixation de la pointe (12) est protégée du contact direct avec la terre et donc de l'usure. Une bonne tenue dans le temps est donc assurée avec une telle fixation. La partie de liaison (4) est disposée sous la pointe (12) de manière à garder une zone usable relativement importante sur la partie active (3 ; 3'). Dans l'exemple de réalisation de la pointe non réversible représentée sur la figure 1, la partie de liaison (4) se trouve sensiblement à l'extrémité opposée du tranchant frontal (13). Pour une pointe réversible, la partie de liaison (4) est disposée sensiblement au centre de la pointe (12) entre les deux parties actives (3, 3').

D'après la figure 4 représentant une vue de face simplifiée, on voit que la liaison, réalisée par la rainure (15), la partie de liaison (4) et le coin (18), reste sensiblement dans l'épaisseur du soc (11). De ce fait, la liaison ne sera pas usée par le frottement de la terre et le contact entre la rainure (15), la partie de liaison (4) et le coin (18), n'est pas altéré. De plus, la pointe (12) ne perd pas ses capacités de pénétration en terre car l'épaisseur de la partie active (3) reste constante, même après mi-usure. Avec une telle pointe (12), la durée d'utilisation du soc (11) est bien plus importante et l'utilisation du matériel (pointe (12) - soc (11)) est bien meilleure. D'une manière connue, la pointe (12) est aussi amenée à protéger le contresep (10) pour que son usure soit plus lente et plus régulière. La pointe (12) est donc montée, décalée latéralement, pour que le tranchant latéral (14) protège le nez de contresep.

A la lumière de la figure 1, on remarque aussi que ni la pointe (12), ni la liaison rainure (15) - partie de liaison (4) - coin (18) n'entrave l'écoulement de la terre lors du labour. De plus, cette liaison sous la partie active (3) étant protégée de l'usure, la fixation a une bonne tenue dans le temps.

Il est encore possible d'envisager d'autres formes pour la section de la liaison, une forme en escalier, en triangle, ...

Selon un autre exemple de réalisation non représenté, la première face (16) de référence de la rainure (15) est positionnée indifféremment sur le soc (11) par rapport à la direction de travail (A). Elle n'est pas sensiblement parallèle à la direction d'avance (A).

D'une manière généralement connue de l'homme de l'art, les charrues comportent plusieurs corps de labour (7) qui sont disposés l'un derrière l'autre et le corps de labour (7), via le sep (8), est fixé au bâti d'une charrue par l'intermédiaire d'un age. Un tel soc (11) peut être fixé sur tout type de charrue, à savoir notamment une charrue simple ou une charrue réversible, tractée, portée ou semi-portée. La pointe (12) de soc est remplacée lorsque cette dernière est usée ou endommagée.

Différents exemples de réalisation de corps de labour d'une charrue comportant un soc (11) et une pointe (12) selon l'invention ont été décrit dans la présente description. D'une manière plus générale, cette invention s'adresse aussi à d'autres matériels destinés à travailler le sol dans les travaux publics ou à d'autres machines agricoles de préparation de lits de semences, ...

On ne se limitera donc pas à la désignation d'un soc (11) et d'une pointe (12) mais plus généralement à celle d'un outil de travail (1) et d'une pièce d'usure (2). L'outil de travail (1) est destiné à travailler dans le sol et est protégé d'une usure importante par une pièce d'usure (2) conformément à la présente invention.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection.

## Revendications

1. Outil de travail (1, 11) protégé par une pièce d'usure (2, 12) présentant au moins une partie active (3) et une partie de liaison (4) montée sur l'outil de travail (1, 11) au moyen d'une rainure de guidage (15) ménagée dans l'outil de travail (1, 11), ***caractérisé par le fait* que** le verrouillage en rotation et en translation de ladite pièce d'usure (2, 12) est réalisé par l'intermédiaire d'un coin de blocage (18) monté entre ladite partie de liaison (4) et ladite rainure de guidage (15).

2. Outil de travail selon la revendication 1, ***caractérisé par le fait* que** ladite rainure de guidage (15) de l'outil de travail (1, 11) est convergente et présente une première face (16) et une deuxième face (17) inclinées d'un premier angle (α) l'une par rapport à l'autre.

3. Outil de travail selon la revendication 1 ou 2, ***caractérisé par le fait* que** ladite partie de liaison (4) est symétrique et comporte une troisième face (19) et une quatrième face (20) inclinées chacune selon un deuxième angle (β) par rapport à l'horizontale.

4. Outil de travail selon l'une quelconque des revendications 1 à 3, ***caractérisé par le fait* que** ledit coin de blocage (18) est convergent et présente une cinquième face (21) et une sixième face (22) inclinées du premier angle (α) l'une par rapport à l'autre.

5. Outil de travail selon l'une quelconque des revendications 1 à 4, ***caractérisé par le fait* que** ladite rainure de guidage (15) n'est pas symétrique.

6. Outil de travail selon l'une quelconque des revendications 1 à 5, ***caractérisé par le fait* que** ladite pièce d'usure (2, 12) peut être placée dans une position bien définie sur l'outil de travail (1, 11) par l'intermédiaire dudit coin de blocage (18).

7. Outil de travail selon l'une quelconque des revendications 1 à 6, ***caractérisé par le fait* que** ladite partie de liaison (4) est disposée sensiblement en dessous de ladite partie active (3).

8. Outil de travail selon l'une quelconque des revendications 1 à 7, ***caractérisé par le fait* que** ledit coin de blocage (18) présente une longueur sensiblement égale à la longueur de ladite partie de liaison (4) de la pièce d'usure (2, 12) et une épaisseur sensiblement égale à l'épaisseur de ladite partie de liaison (4).

9. Outil de travail selon l'une quelconque des revendications 1 à 8, ***caractérisé par le fait* que** la direction de ladite première face (16) est sensiblement parallèle à la direction de travail (A).

10. Corps de labour (7) comportant notamment un soc de charrue (11) protégé par une pointe (12), ***caractérisé par le fait* que** le soc (11) correspond audit outil de travail (1) et que la pointe (12) correspond à ladite pièce d'usure (2) selon l'une quelconque des revendications 1 à 9.

11. Charrue ***caractérisée par le fait* qu'**elle comporte au moins un corps de labour (7) selon la revendication 10.

## Patentansprüche

1. Arbeitswerkzeug (1, 11), das von einem Verschleißteil (2, 12) geschützt ist, das mindestens ein wirkendes Teil (3) und ein auf dem Arbeitswerkzeug (1, 11) mittels einer in dem Arbeitswerkzeug (1, 11) ausgebildeten Führungsrille (15) montiertes Verbindungsteil (4) aufweist, ***dadurch gekennzeichnet,* dass** die Dreh- und Translationsverriegelung des Verschleißteils (2, 12) mittels eines Feststellkeils (18) durchgeführt ist, der zwischen dem Verbindungsteil (4) und der Führungsrille (15) montiert ist.

2. Arbeitswerkzeug nach Anspruch 1, ***dadurch gekennzeichnet,* dass** die Führungsrille (15) des Arbeitswerkzeugs (1, 11) konvergierend ist und eine erste Fläche (16) und eine zweite Fläche (17) aufweist, die in einem ersten Winkel (α) im Verhältnis zueinander geneigt sind.

3. Arbeitswerkzeug nach Anspruch 1 oder 2, ***dadurch gekennzeichnet,* dass** das Verbindungsteil (4) symmetrisch ist und eine dritte Fläche (19) und eine vierte Fläche (20) aufweist, die jeweils in einem zweiten Winkel (β) im Verhältnis zur Horizontalen geneigt sind.

4. Arbeitswerkzeug nach irgend einem der Ansprüche 1 bis 3, ***dadurch gekennzeichnet,* dass** der Feststellkeil (18) konvergierend ist und eine fünfte Fläche (21) und eine sechste Fläche (22) aufweist, die im ersten Winkel (α) im Verhältnis zueinander geneigt sind.

5. Arbeitswerkzeug nach irgend einem der Ansprüche 1 bis 4, ***dadurch gekennzeichnet,* dass** die Führungsrille (15) nicht symmetrisch ist.

6. Arbeitswerkzeug nach irgend einem der Ansprüche 1 bis 5, ***dadurch gekennzeichnet,* dass** das Verschleißteil (2, 12) mittels des Feststellkeils (18) in eine festgelegte Stellung auf dem Arbeitswerkzeug (1, 11) gebracht werden kann.

7. Arbeitswerkzeug nach irgend einem der Ansprüche 1 bis 6, ***dadurch gekennzeichnet*, dass** das Verbindungsteil (4) im wesentlichen unter dem wirkenden Teil (3) angeordnet ist.

8. Arbeitswerkzeug nach irgend einem der Ansprüche 1 bis 7, ***dadurch gekennzeichnet*, dass** der Feststellkeil (18) eine Länge aufweist, die im wesentlichen der Länge des Verbindungsteils (4) des Verschleißteils (2, 12) gleich ist und eine Dicke, die im wesentlichen der Dicke des Verbindungsteils (4) gleich ist.

9. Arbeitswerkzeug nach irgend einem der Ansprüche 1 bis 8, ***dadurch gekennzeichnet*, dass** die Richtung der ersten Fläche (16) im wesentlichen parallel zur Arbeitsrichtung (A) ist.

10. Pflugkörper (7), der insbesondere eine durch eine Spitze (12) geschützte Pflugschar (11) aufweist, ***dadurch gekennzeichnet*, dass** die Schar (11) dem Arbeitswerkzeug (1) entspricht und dass die Spitze (12) dem Verschleißteil (2) entspricht nach irgend einem der Ansprüche 1 bis 9.

11. Pflug ***dadurch gekennzeichnet*, dass** er mindestens einen Pflugkörper (7) nach Anspruch 10 aufweist.

## Claims

1. Work tool (1, 11) protected by a wearing part (2, 12) having at least one active portion (3) and one connection portion (4) mounted on the work tool (1, 11) by means of a guiding groove (15) provided in the work tool (1, 11), ***characterized in* that** the rotational and translational locking of the said wearing part (2, 12) is carried out by means of a locking wedge (18) mounted between the said connection portion (4) and the said guiding groove (15).

2. Work tool according to claim 1, ***characterized in* that** the said guiding groove (15) of the work tool (1, 11) is convergent and has a first face (16) and a second face (17) inclined by a first angle (α) with regard to one another.

3. Work tool according to claim 1 or 2, ***characterized in* that** the said connection portion (4) is symmetrical and comprises a third face (19) and a fourth face (20) each inclined by a second angle (β) with regard to the horizontal.

4. Work tool according to any one of claims 1 to 3, ***characterized in* that** the said locking wedge (18) is convergent and has a fifth face (21) and a sixth face (22) inclined by the first angle (α) with regard to one another.

5. Work tool according to any one of claims 1 to 4, ***characterized in* that** the said guiding groove (15) is not symmetrical.

6. Work tool according to any one of claims 1 to 5, ***characterized in* that** the said wearing part (2, 12) can be placed in a well-defined position on the work tool (1, 11) by means of the said locking wedge (18).

7. Work tool according to any one of claims 1 to 6, ***characterized in* that** the said connection portion (4) is arranged substantially below the said active portion (3).

8. Work tool according to any one of claims 1 to 7, ***characterized in* that** the said locking wedge (18) has a length substantially equal to the length of the said connection portion (4) of the wearing part (2, 12) and a thickness substantially equal to the thickness of the said connection portion (4).

9. Work tool according to any one of claims 1 to 8, ***characterized in* that** the direction of the said first face (16) is substantially parallel to the work direction (A).

10. Plough body (7) in particular comprising a ploughshare (11) protected by a point (12), ***characterized in* that** the share (11) corresponds to the said work tool (1) and the point (12) corresponds to the said wearing part (2) according to any one of claims 1 to 9.

11. Plough ***characterized in* that** it comprises at least one plough body (7) according to claim 10.
